# DEMANDE DE BREVET EUROPEEN

(11) **EP 4 309 805 A1**
(43) Date de publication de la demande: **24.01.2024**
(21) Numéro de dépôt: 23186681.5
(22) Date de dépôt: 20.07.2023
(51) Int. Cl.: B05D 3/06, B05D 5/06, B05D 7/02, B44C 1/22, B44C 3/00

(54) **PROCÉDÉ DE FABRICATION D'UNE PIÈCE DE VÉHICULE MUNIE D'UN REVÊTEMENT**

(30) Priorité: 21.07.2022 FR 2207478
(71) Demandeur: Compagnie Plastic Omnium SE, 69007 Lyon (FR)
(72) Inventeur: GUILLIER, Stéphane, 01150 SAINTE-JULIE (FR); PELLERIN, Anais, 01150 SAINTE-JULIE (FR); BERGERON-VANHILLE, Aurélie, 01150 SAINTE-JULIE (FR)
(74) Mandataire: LLR

(57) **Abrégé**

Ce procédé de fabrication d'une pièce de véhicule (2) comprend les étapes suivantes :
- application d'une couche de laque (6) sur une pièce en matière plastique (4), la couche de laque (6) présentant un aspect visuel différent de celui de la pièce en matière plastique (4), et
- irradiation partielle de la couche de laque (6) avec un rayonnement laser (8) de manière à graver la couche de laque (6).

## Description

L'invention concerne une pièce de véhicule automobile. Plus particulièrement, l'invention concerne un procédé de fabrication d'une pièce de véhicule contribuant à l'aspect extérieur du véhicule et une pièce de véhicule obtenue par un tel procédé.

Un véhicule automobile comprend une pluralité de pièces formant sa carrosserie extérieure et participant grandement à définir l'esthétique générale du véhicule. Il est possible de traiter une surface externe de ces pièces afin d'améliorer leur aspect. On connait du document FR3099714A1 un procédé de fabrication d'une pièce de véhicule dans lequel on applique un multicouche de peinture sur une pièce transparente puis on irradie partiellement une partie du multicouche de peinture à l'aide d'un rayonnement laser afin créer un motif dans le multicouche de peinture laissant apparaitre partiellement la pièce transparente.

Ce procédé permet d'améliorer l'esthétique du véhicule, mais peut présenter certains inconvénients. Le multicouche de peinture utilisé dans ce document est constitué de trois couches différentes, à savoir une couche de primaire, une couche de base et une couche de vernis. Il en résulte que le multicouche présente une épaisseur relativement importante, généralement comprise entre 60 et 80 µm. Cela crée un effet dit « sticker », ou autocollant, sur les bords du motif selon lequel on sent, en passant le doigt le long de ces bords, la différence de niveau entre le multicouche et les zones gravées au laser, ce qui peut donner une impression désagréable pouvant connoter une mauvaise qualité de la pièce de véhicule. De plus, la présence de trois couches distinctes impose d'appliquer ces couches les unes après les autres, ce qui augmente le temps de fabrication de la pièce de véhicule et ainsi son coût de fabrication. Par ailleurs, le procédé de ce document est appliqué à une pièce transparente, si bien qu'il peut ne pas être adapté à tout type de pièce de véhicule, notamment toutes les pièces de carrosserie.

L'invention a notamment pour but de remédier à ces problèmes en proposant un procédé de fabrication d'une pièce de véhicule réduisant l'effet « sticker » se manifestant dans l'art antérieur, ce en simplifiant le procédé de fabrication de la pièce de véhicule.

A cet effet, on prévoit selon l'invention un procédé de fabrication d'une pièce de véhicule qui comprend les étapes suivantes :
- application d'une couche de laque sur une pièce en matière plastique, la couche de laque présentant un aspect visuel différent de celui de la pièce en matière plastique, et
- irradiation partielle de la couche de laque avec un rayonnement laser de manière à graver la couche de laque.

L'expression « graver la couche de laque » signifie ici que la couche de laque est gravée dans toute son épaisseur.

Ainsi, le multicouche de peinture de l'art antérieur est remplacé par une couche unique de laque, sans qu'une couche de vernis ne soit nécessaire. Autrement dit, la pièce en matière plastique est munie d'un revêtement constitué d'une unique couche formée par la couche de laque. On comprend immédiatement que l'application de la couche de laque est moins complexe et chronophage à mettre en oeuvre que l'application des trois couches constituant le multicouche de peinture du procédé de l'art antérieur. D'ailleurs, la laque remplit les fonctions assurées par le multicouche de peinture de l'art antérieur, à savoir la coloration de la pièce en matière plastique et la protection de la pièce en matière plastique des agressions extérieures, qu'elles soient mécaniques ou occasionnées par le rayonnement ultraviolet des rayons solaires. En d'autres termes, la couche de laque se suffit à elle-même.

En outre, la laque permet d'obtenir une couleur d'aspect similaire à celle du multicouche de l'art antérieur avec une épaisseur bien inférieure à celle du multicouche. Il s'ensuit que l'invention permet de réduire l'effet « sticker » sans impacter l'esthétique de la pièce de véhicule.

Par ailleurs, l'absence de couche de vernis simplifie la gravure par laser, dans la mesure où ce type de couche est compliquée à graver sans endommager la pièce sous-jacente.

Il convient de noter que la laque est une laque à usage industriel.

Selon une variante de réalisation de l'invention, avant d'appliquer la couche de laque sur la pièce en matière plastique, on applique une couche de primaire sur la pièce en matière plastique.

On améliore ainsi l'adhérence de la laque sur la pièce en matière plastique sans pour autant trop augmenter l'épaisseur du revêtement appliqué sur la pièce.

Avantageusement, la pièce de matière plastique comprend un thermoplastique ou un thermodurcissable, par exemple du polypropylène, du polycarbonate, du polyméthacrylate de méthyle, de l'acrylonitrile butadiène styrène, un mélange de polycarbonate et d'acrylonitrile butadiène styrène ou un préimprégné en feuille.

La pièce en matière plastique est ainsi réalisée dans un matériau dont l'aspect, en surface ou dans la masse, peut facilement être adapté à l'esthétique générale du véhicule.

Avantageusement, le rayonnement laser présente une longueur d'onde comprise dans l'infrarouge, de préférence dans l'infrarouge proche.

Un tel rayonnement laser permet d'efficacement éliminer la couche de laque et, le cas échéant, la couche de primaire.

Avantageusement, l'aspect visuel comprend au moins un des éléments choisis dans la liste suivante : couleur, rugosité, effet pailleté, effet nacré, effet moucheté, variation de teinte, effet bariolé multicolore, zones de couleur ou d'aspect variable ou aléatoire.

L'invention confère ainsi une grande liberté dans la personnalisation de la pièce de véhicule pour obtenir des zones présentant au moins deux aspects visuels différents. Une fois le procédé mis en oeuvre, la surface extérieure de la pièce de véhicule présente deux zones d'aspects différents, correspondant aux zones irradiées par le rayonnement laser et les zones non-irradiées, l'aspect de ces deux zones pouvant être choisi en fonction d'un cahier des charges prédéfini.

Avantageusement, la couche de laque présente une épaisseur comprise entre 10 et 40 µm, de préférence elle présente une épaisseur de 25 µm plus ou moins 5 µm.

On s'assure ainsi que le changement de hauteur entre les zones irradiées par le rayonnement laser et les zone non-irradiées n'est quasiment pas perceptible au toucher ou est quasiment invisible à l'oeil nu, de sorte qu'on ne génère pas d'effet « sticker » ou qu'on l'atténue à tout le moins.

Avantageusement, la pièce en matière plastique est transparente ou translucide dans le spectre visible.

Il est ainsi possible d'agencer une source de lumière derrière la pièce en matière plastique pour éclairer cette dernière et ainsi transmettre de la lumière vers l'environnement extérieur à travers la zone irradiée par le rayonnement laser. On augmente ainsi les possibilités de personnalisation de la pièce de véhicule et d'aspects visuels de celle-ci.

Avantageusement, la pièce en matière plastique est réalisée dans un matériau transparent aux ondes émises par un organe d'émission d'ondes, tel qu'un radar ou un lidar.

Il est ainsi possible d'agencer un organe d'émission d'ondes, tel qu'un radar ou un lidar, derrière la pièce en matière plastique et ainsi transmettre des ondes vers l'environnement extérieur à travers la zone irradiée par le rayonnement laser. On permet ainsi à la pièce de véhicule de former un radôme.

On prévoit également selon l'invention une pièce de véhicule obtenue par la mise en oeuvre d'un procédé de fabrication tel que défini dans ce qui précède.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en section d'une première étape de la mise en oeuvre d'un procédé de fabrication selon un premier mode de réalisation de l'invention,
[Fig. 2] la figure 2 est une vue en section d'une deuxième étape de la mise en oeuvre du procédé de fabrication selon le premier mode de réalisation de l'invention,
[Fig. 3] la figure 3 est une vue en section d'une première étape de la mise en oeuvre d'un procédé de fabrication selon un second mode de réalisation de l'invention, et
[Fig. 4] la figure 4 est une vue en section d'une deuxième étape de la mise en oeuvre du procédé de fabrication selon le second mode de réalisation de l'invention.

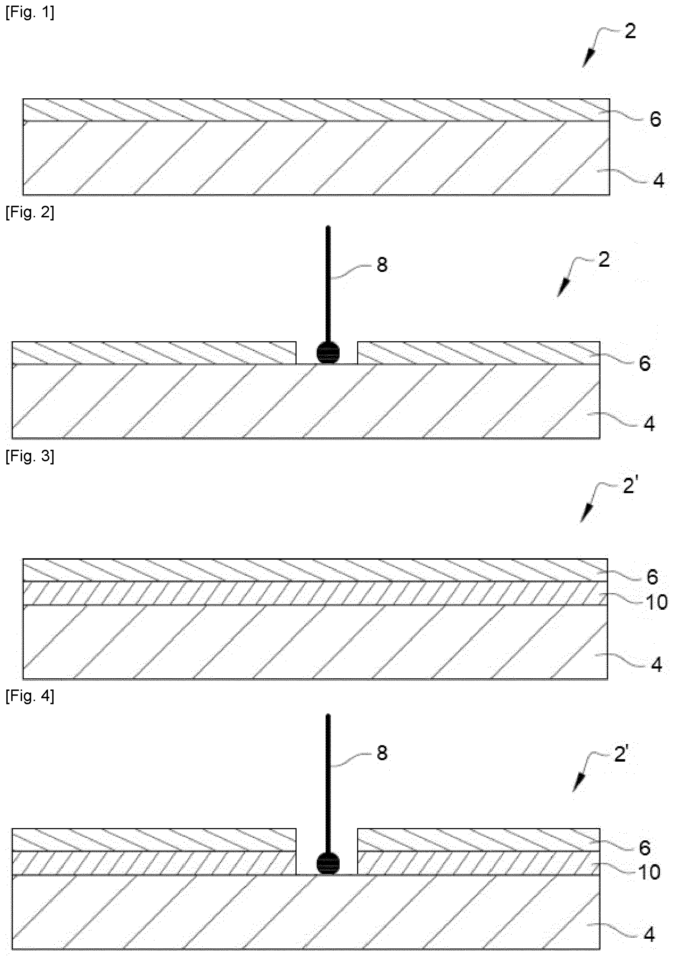

On a représenté sur la figure 1 une première étape d'un procédé de fabrication d'une pièce de véhicule 2 selon un premier mode de réalisation l'invention.

La pièce de véhicule 2 comprend une pièce en matière plastique 4 destinée à former une pièce extérieure d'un véhicule automobile, par exemple une pièce de carrosserie du véhicule. La pièce en matière plastique 4 est réalisée dans un thermoplastique ou un thermodurcissable, par exemple du polypropylène (PP), du polycarbonate (PC) du polyméthacrylate de méthyle (PMMA), de l'acrylonitrile butadiène styrène (ABS), un mélange de polycarbonate et d'acrylonitrile butadiène styrène (ABS-PC) ou un préimprégné en feuille (SMC, sigle pour les termes anglo-saxons « Sheet Molding Compound »). Lors de sa fabrication, la pièce en matière plastique 4 peut être mélangée avec un additif lui conférant une résistance aux rayonnements ultraviolets et infrarouges. La pièce en matière plastique 4 est réalisée par moulage. Un tel procédé étant connu, on ne le détaillera pas davantage dans ce qui suit.

La pièce en matière plastique 4 présente un aspect visuel prédéfini. Pour ne citer que quelques exemples de réalisation, la pièce en matière plastique est réalisée dans une couleur prédéfinie, elle présente sur sa surface extérieure une certaine rugosité, sa surface extérieure peut présenter un effet pailleté, un effet nacré, un effet moucheté, une variation de teinte, un effet bariolé multicolore, et/ou des zones de couleur ou d'aspect variable ou aléatoire.

Selon une variante de réalisation de l'invention, la pièce en matière plastique est réalisée dans un matériau transparent ou translucide et est destinée à protéger une source de lumière (non représentée). On entend par « transparente », respectivement « translucide », qu'elle est au moins transparente, respectivement translucide, à tout rayonnement lumineux présentant une longueur d'onde comprise dans le spectre visible, c'est-à-dire comprise entre environ 380 et 780 nm. A titre d'exemple de réalisation, une telle pièce peut être réalisée dans un plastique présentant cette caractéristique comme du polypropylène (PP), du polycarbonate (PC) ou du polyméthacrylate de méthyle (PMMA). Selon cette variante, la pièce en matière plastique est destinée à protéger une source de lumière (non représentée) configurée pour éclairer en direction de la pièce en matière plastique et à travers celle-ci.

Selon une autre variante de réalisation de l'invention, la pièce en matière plastique est destinée à protéger un organe d'émission d'ondes (non représenté), tel qu'un radar ou un lidar, et forme un radôme. Dans le cas du radar, l'organe d'émission d'ondes peut par exemple être configuré pour émettre des ondes de fréquence de l'ordre de 24 GHz ou de l'ordre de 77 GHz. Dans le cas du lidar, l'organe d'émission d'ondes peut être configuré pour émettre des ondes de longueur d'onde comprise entre 750 nm et 1,5 µm. Selon cette variante, la pièce en matière plastique est réalisée dans un matériau transparent aux ondes émises par l'organe d'émission d'ondes, c'est-à-dire capable à transmettre une fraction supérieure à 90% d'un flux d'ondes incident le traversant.

La pièce de véhicule 2 comprend une couche de laque 6 qui est déposée sur la surface externe de la pièce en matière plastique 4, c'est-à-dire la surface de la pièce en matière plastique 4 destinée être exposée à l'environnement extérieur lorsqu'elle est installée sur un véhicule. La couche de laque 6 est opaque et permet de colorer la surface extérieure de la pièce de véhicule 2. La couche de laque 6 présente une épaisseur comprise entre 10 et 40 µm, de préférence elle présente une épaisseur de 25 µm plus ou moins 5 µm. La couche de laque présente un aspect visuel prédéfini différent de celui de la pièce en matière plastique 4 décrit dans ce qui précède. La laque utilisée pour déposer la couche de laque 6 est une laque à usage industriel.

Selon la première étape du procédé de fabrication de la pièce de véhicule 2, on dépose la couche de laque 6 sur la pièce en matière plastique 4. La couche de laque 6 est entièrement réticulée avant ou après son dépôt sur la pièce en matière plastique 4. La laque comprend un durcisseur qui lui permet d'obtenir les propriétés de la couche de vernis mentionnée dans le document FR3099714A1 cité plus haut. La pièce en matière plastique 4 est ainsi munie d'un revêtement constitué d'une unique couche formée par la couche de laque 6.

On a représenté en figure 2 une seconde étape du procédé de fabrication de la pièce de véhicule 2. Dans cette étape, on irradie une partie de la pièce de véhicule 2 à l'aide d'un rayonnement laser 8 de manière à enlever (notamment par brûlage) la couche de laque 6. Cette ablation, ou grattage, est effectuée dans toute l'épaisseur de la couche de laque 6. Cette opération est communément désignée par les termes anglo-saxons « laser-etching » pouvant être traduits par « grattage laser ». Le rayonnement laser 8 présente une longueur d'onde comprise dans l'infrarouge, c'est-à-dire comprise entre 700 nm et 20000 nm dans le cadre de l'invention.

L'irradiation est réalisée uniquement dans une partie de la pièce de véhicule 2 dans le sens où elle est réalisée selon un motif prédéfini de la surface externe de la couche de laque 6. Elle est paramétrée de sorte que la couche de laque 6 soit irradiée, donc éliminée dans le motif et dans toute son épaisseur, mais sans endommager la pièce en matière plastique 4.

Après l'irradiation, la surface de la pièce de véhicule 2 présente au moins deux aspects visuels.

Dans la zone du motif gratté prédéfini, la pièce en matière plastique 4 n'est pas revêtue. Dans cette zone, la surface extérieure de la pièce en matière plastique 4 forme la surface extérieure de la pièce de véhicule 2, de sorte que c'est l'aspect de la pièce en matière plastique 4 qui est visible de l'extérieur dans le motif. Dans le cas d'une pièce réalisée en matière transparente ou translucide, la lumière peut être transmise de la source de lumière vers l'environnement extérieur. Et dans le cas d'une pièce en matière plastique configurée pour protéger un organe d'émission d'ondes tel qu'un radar ou un lidar, les ondes émises par l'organe d'émission d'ondes peuvent être transmises de l'organe d'émission d'ondes vers l'environnement extérieur.

En dehors de la zone du motif gratté prédéfini, la pièce en matière plastique 4 est revêtue de la couche de laque 6. Dans cette zone, la surface extérieure de la couche de laque 6 forme la surface extérieure de la pièce de véhicule 2, de sorte que c'est l'aspect de la couche de laque 6 qui est visible de l'extérieur dans le motif. Dans cette zone, dans le cas où la pièce en matière plastique est transparente ou translucide, la lumière visible ne peut être transmise de l'environnement extérieur vers la pièce en matière plastique 4. Etant donné que la pièce en matière plastique 4 et la couche de laque 6 présentent des aspects visuels différents, le motif est aisément observable par une personne regardant la pièce de véhicule 2 depuis l'extérieur.

Après cette étape d'irradiation, on peut prévoir une étape supplémentaire de lustrage de la pièce de véhicule 2. Ce lustrage permet d'arrondir les coins formés par la gravure effectuée lors de l'étape d'irradiation, et donc d'améliorer l'esthétique de la pièce de véhicule 2 et son aspect de surface au toucher, atténuant davantage encore l'effet « sticker ».

On a représenté en figure 3 une première étape d'un procédé de fabrication d'une pièce de véhicule 2' selon un second mode de réalisation de l'invention.

La pièce de véhicule 2' diffère de celle du premier mode de réalisation en ce qu'elle comprend une couche de primaire 10 interposée entre la surface externe de la pièce en matière plastique 4 et la couche de laque 6. La couche de primaire 10 permet d'améliorer l'adhérence de la couche de laque 6 à la pièce en matière plastique 4.

Selon la première étape du procédé de fabrication de la pièce de véhicule 2', on dépose la couche de primaire 10 puis la couche de laque 6 sur la pièce en matière plastique 4.

On a représenté en figure 4 une seconde étape du procédé de fabrication de la pièce de véhicule 2'. Dans cette étape, on irradie une partie de la pièce de véhicule 2' à l'aide du rayonnement laser 8 de manière à enlever (notamment par brûlage) la couche de laque 6 et la couche de primaire 10. Cette ablation, ou grattage, est effectuée dans toute l'épaisseur de la couche de laque 6 et de la couche de primaire 10.

L'irradiation est réalisée uniquement dans une partie de la pièce de véhicule 2' dans le sens où elle est réalisée selon un motif prédéfini de la surface externe de la couche de laque 6. Elle est paramétrée de sorte que la couche de laque 6 et la couche de primaire 10 soit irradiées, donc éliminées dans le motif et dans toute leur épaisseur, mais sans endommager la pièce en matière plastique 4.

Après l'irradiation, la surface de la pièce de véhicule 2' présente au moins deux aspects visuels.

Dans la zone du motif gratté prédéfini, la pièce en matière plastique 4 n'est pas revêtue. Dans cette zone, la surface extérieure de la pièce en matière plastique 4 forme la surface extérieure de la pièce de véhicule 2', de sorte que c'est l'aspect de la pièce en matière plastique 4 qui est visible de l'extérieur dans le motif. Dans le cas d'une pièce réalisée en matière transparente ou translucide, la lumière peut être transmise de la source de lumière vers l'environnement extérieur.

En dehors de la zone du motif gratté prédéfini, la pièce en matière plastique 4 est revêtue de la couche de primaire 10 et de la couche de laque 6. Dans cette zone, la surface extérieure de la couche de laque 6 forme la surface extérieure de la pièce de véhicule 2', de sorte que c'est l'aspect de la couche de laque 6 qui est visible de l'extérieur dans le motif. Dans cette zone, dans le cas où la pièce en matière plastique est transparente ou translucide, la lumière visible ne peut être transmise de l'environnement extérieur vers la pièce en matière plastique 4. Etant donné que la pièce en matière plastique 4 et la couche de laque 6 présentent des aspects visuels différents, le motif est aisément observable par une personne regardant la pièce de véhicule 2' depuis l'extérieur.

Après cette étape d'irradiation, on peut prévoir une étape supplémentaire de lustrage de la pièce de véhicule 2'. Ce lustrage permet d'arrondir les coins formés par la gravure effectuée lors de l'étape d'irradiation, et donc d'améliorer l'esthétique de la pièce de véhicule 2' et son aspect de surface au toucher, atténuant davantage encore l'effet « sticker ».

L'invention n'est pas limitée aux modes de réalisation présentés et d'autres modes de réalisation apparaîtront clairement à l'homme du métier.

### Liste de références

2 ; 2' : pièce de véhicule
4 : pièce en matière plastique
6 : couche de laque
8 : rayonnement laser
10 : couche de primaire

## Revendications

1. Procédé de fabrication d'une pièce de véhicule (2 ; 2'), **caractérisé en ce qu'**il comprend les étapes suivantes :
- application d'une couche de laque (6) sur une pièce en matière plastique (4), la couche de laque (6) présentant un aspect visuel différent de celui de la pièce en matière plastique (4), et
- irradiation partielle de la couche de laque (6) avec un rayonnement laser (8) de manière à graver la couche de laque (6).

2. Procédé selon la revendication précédente, dans lequel avant d'appliquer la couche de laque (6) sur la pièce en matière plastique (4), on applique une couche de primaire (10) sur la pièce en matière plastique (4).

3. Procédé selon l'une quelconque des revendications précédentes, dans lequel la pièce de matière plastique (4) comprend un thermoplastique ou un thermodurcissable, par exemple du polypropylène, du polycarbonate, du polyméthacrylate de méthyle, de l'acrylonitrile butadiène styrène, un mélange de polycarbonate et d'acrylonitrile butadiène styrène ou un préimprégné en feuille.

4. Procédé selon l'une quelconque des revendications précédentes, dans lequel le rayonnement laser (8) présente une longueur d'onde comprise dans l'infrarouge, de préférence dans l'infrarouge proche.

5. Procédé selon l'une quelconque des revendications précédentes, dans lequel l'aspect visuel comprend au moins un des éléments choisis dans la liste suivante : couleur, rugosité, effet pailleté, effet nacré, effet moucheté, variation de teinte, effet bariolé multicolore, zones de couleur ou d'aspect variable ou aléatoire.

6. Procédé selon l'une quelconque des revendications précédentes, dans lequel la couche de laque (6) présente une épaisseur comprise entre 10 et 40 µm, de préférence elle présente une épaisseur de 25 µm plus ou moins 5 µm.

7. Procédé selon l'une quelconque des revendications précédentes, dans lequel la pièce en matière plastique (4) est transparente ou translucide dans le spectre visible.

8. Procédé selon l'une quelconque des revendications précédentes, dans lequel la pièce en matière plastique (4) est réalisée dans un matériau transparent aux ondes émises par un organe d'émission d'ondes, tel qu'un radar ou un lidar.

9. Pièce de véhicule (2 ; 2') **caractérisé en ce qu'**elle est obtenue par la mise en oeuvre d'un procédé de fabrication selon l'une quelconque des revendications précédentes.
